# EUROPEAN PATENT SPECIFICATION

(11) **EP 4 027 650 B1**
(45) Date of publication and mention of the grant of the patent: **26.08.2026**
(21) Application number: 20871136.6
(22) Date of filing: 19.09.2020
(51) Int. Cl.: H04Q 11/00

(54) **METHOD AND DEVICE FOR SERVICE PROCESSING IN OPTICAL TRANSPORT NETWORK, AND SYSTEM**
VERFAHREN UND VORRICHTUNG ZUM VERARBEITEN VON DIENSTEN IN EINEM OPTISCHEN TRANSPORTNETZ UND SYSTEM
PROCÉDÉ ET DISPOSITIF DE TRAITEMENT DE DONNÉES DE SERVICE DANS UN RÉSEAU DE TRANSPORT OPTIQUE, ET SYSTÈME ASSOCIÉ

(30) Priority: 30.09.2019 CN 201910942575
(43) Date of publication of application: 13.07.2022
(73) Proprietor: Huawei Technologies Co., Ltd., Longgang District Shenzhen, Guangdong 518129 (CN)
(72) Inventor: SU, Wei, Shenzhen, Guangdong 518129 (CN); WU, Qiuyou, Shenzhen, Guangdong 518129 (CN); VISSERS, Maarten Petrus Joseph, Shenzhen, Guangdong 518129 (CN)
(74) Representative: MERH-IP Matias Erny Reichl Hoffmann Patentanwälte PartG mbB
(86) International application number: PCT/CN2020/116349
(87) International publication number: WO 2021/063197

(56) References cited:
- EP-A1- 2 154 868
- EP-A1- 2 365 652
- EP-A1- 2 991 252
- EP-A2- 1 499 048
- WO-A1-2021/244489
- CN-A- 1 734 986
- CN-A- 1 984 018
- CN-A- 105 451 102
- CN-A- 111 490 845
- CN-A- 111 865 887
- US-A1- 2011 150 468

## Description

### TECHNICAL FIELD

This application relates to the field of optical communications technologies, and in particular, to a service processing technology in an optical transport network.

### BACKGROUND

As a core technology of a backbone bearer network, an optical transport network (optical transport network, OTN) includes optical bearer containers with a plurality of rates. For example, an optical data unit 0 (optical data unit 0, ODU 0) is a bearer container with a minimum rate in a current OTN technology. The optical data unit 0 has a rate of about 1.25 gigabits per second (Gigabit per second, Gbps), and is used to carry Ethernet service data of 1 Gbps.

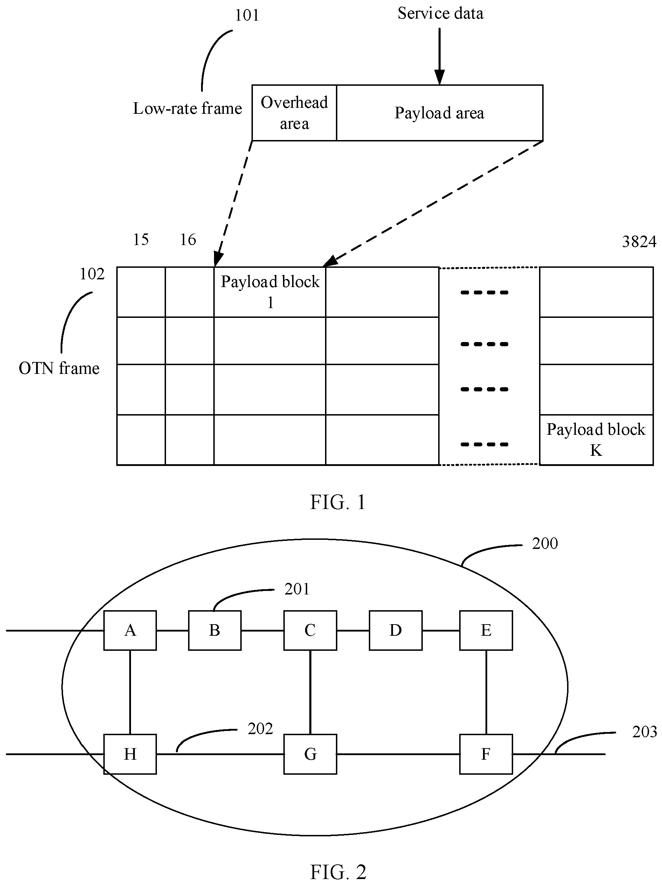

To improve carrying efficiency, a time division multiplexing technology is currently used in the optical bearer container of the OTN. Specifically, a high-rate bearer container is divided into a plurality of fixed slot, to carry a plurality of services. Currently, the OTN supports two granularities: a 1.25G slot and a 5G slot. For a service lower than 1 Gbps, an effective carrying solution cannot be provided for a current slot granularity of the bearer container of the OTN. Therefore, a technical solution shown in FIG. 1 is provided in the industry. As shown in FIG. 1, an area (that is, an area including the first row to the fourth row and the 17^{th} column to the 3824^{th} column) that is of an OTN frame (102) and that can be used to carry service data is divided into a plurality of payload blocks (that is, payload blocks 1 to K shown in FIG. 1). Further, a low-rate frame (101) is newly defined in FIG. 1. The low-rate frame includes an overhead area and a payload area. The payload area is used to carry service data. The low-rate frame carrying the service data is mapped to a payload block, to carry low-rate service data.

EP 2 365 652 A1 discloses a method for transmitting client signals in an OTN, including: obtaining the client signals, and determining an Optical Channel Payload (OPU) Tributary Slot (TS) in an OPU according to the client signals; mapping the client signals to the OPU TS in an agnostic Constant Bit Rate (CBR) mapping mode; and adding an overhead into the OPU, and sending the OPU with the added overhead to the OTN.

EP 2 991 252 A1 discloses methods for OTN adaptation to provide sub-rate granularity and distribution include segmenting an OTN signal into N flows of cells with associated identifiers, based on tributary slots of the OTN signal.

### SUMMARY

A problem of relatively low carrying efficiency exists in a solution provided in a conventional technology. Therefore, embodiments of this application provide a service data processing method and apparatus in an optical transport network, and a system.

According to a first aspect, an embodiment of this application provides a service processing method in an optical transport network according to appended independent claim 1.

A flexible OSU frame structure is defined, and structures of the overhead subframe and the data subframe are properly designed, so that carrying efficiency of the OTN frame is improved in the technical solution provided in this application.

In a specific design, the overhead subframe is further used to carry the service data. In this way, carrying efficiency of the OTN frame can be further improved.

In a specific design, the OSU frame includes a plurality of overhead subframes, and there is one overhead subframe at intervals of a fixed quantity of data subframes. A period of the overhead subframe is shortened to improve an overhead processing speed, so that an OTN device quickly responds to an event based on overhead content.

In a specific design, the overhead subframe includes amount information of the service data carried in the OSU frame. The amount information is carried, so that service data extraction processing can be simplified.

In a specific design, the OSU frame includes a service identifier field, and the service identifier field is used to carry the identifier.

In a specific design, the overhead subframe and the data subframe each have a size of 192 bytes; or the overhead subframe and the data subframe each have a size of any value ranging from 112 bytes to 124 bytes; or the overhead subframe and the data subframe each have a size of any value ranging from 240 bytes to 252 bytes; or the overhead subframe and the data subframe each have a size of any value ranging from 496 bytes to 508 bytes.

In a specific design, that the OSU frame corresponds to an identifier of the service data specifically includes: every two subframes of the OSU frame correspond to the identifier of the service data, where the subframe is the overhead subframe or the data subframe. In this way, carrying efficiency of the OTN frame can be further improved.

In a specific design, the method further includes: obtaining a service overhead frame, where the service overhead frame is used to carry some overhead information of the service data; and mapping the service overhead frame to a payload block of the OTN frame.

It should be noted that the foregoing plurality of specific designs may be used in any combination.

According to another aspect, an embodiment of this application provides a service processing apparatus in an optical transport network, according to appended independent claim 9.

According to another aspect, an embodiment of this application provides a service processing method in an optical transport network according to appended independent claim 11.

In a specific design, the overhead subframe is further used to carry the service data.

In a specific design, the OSU frame includes a plurality of overhead subframes, and there is one overhead subframe at intervals of a fixed quantity of data subframes.

In a specific design, the overhead subframe includes amount information of the service data carried in the OSU frame.

In a specific design, the OSU frame includes a service identifier field, and the service identifier field is used to carry the identifier.

A new OSU frame structure is defined and a mapping procedure is defined, so that a carrying efficiency problem faced in a conventional technology can be alleviated in the technology provided in this embodiment of this application.

### BRIEF DESCRIPTION OF DRAWINGS

The following describes the embodiments of this application in more detail with reference to the accompanying drawings.
FIG. 1 is a schematic diagram of a service processing method in a conventional technology;
FIG. 2 is a schematic diagram of a possible application scenario of an embodiment of this application;
FIG. 3 is a schematic diagram of a hardware structure of a possible network device;
FIG. 4 is a schematic diagram of a structure of a possible optical service unit (OSU) frame;
FIG. 5 is a schematic diagram of a structure of another possible OSU frame;
FIG. 6 is a schematic diagram of a structure of a possible overhead subframe;
FIG. 7a is a schematic diagram of an overhead field included in a possible overhead subframe;
FIG. 7b is a schematic diagram of an overhead field included in another possible overhead subframe;
FIG. 7c is a schematic diagram of an overhead field included in a possible dedicated overhead frame;
FIG. 8 is a diagram of a possible service processing procedure;
FIG. 9 is a schematic diagram of a service processing procedure according to an embodiment of this application;
FIG. 10 is a schematic diagram of a possible service identifier addition procedure in the service procedure shown in FIG. 9;
FIG. 11 is a schematic diagram of another possible service identifier addition procedure in the service procedure shown in FIG. 9;
FIG. 12 is a schematic diagram of a structure of a possible service processing apparatus according to an embodiment of this application;
FIG. 13 is a schematic diagram of a structure of another possible network device; and
FIG. 14 is a schematic diagram of a structure of still another possible network device.

### DESCRIPTION OF EMBODIMENTS

First, some terms in this application are explained and described to facilitate understanding by a person skilled in the art.
(1) "A plurality of" means two or more. "And/or" describes an association relationship between associated objects, and three relationships may exist. For example, A and/or B may indicate three cases: Only A exists, both A and B exist, and only B exists. In addition, in the descriptions of this application, words such as "first" and "second" are merely used for distinguishing descriptions, and cannot be understood as an indication or implication of relative importance, and cannot be understood as an indication or implication of a sequence.
(2) The mathematical symbol "*" represents multiplication.
(3) Upstream or downstream means the following: A source device A transmits data to a destination device B, and data passes through a device M. In a data transmission direction, because the device M is located between the device A and the device B, the device A is in an upstream direction of the device M, and the device B is in a downstream direction of the device M.
(4) Service data refers to a service that can be carried by an optical transport network, for example, may be an Ethernet service, a packet service, a wireless backhaul service, or the like.

The embodiments of this application are applicable to an optical network, for example, an OTN. An OTN is usually formed by connecting a plurality of devices through an optical fiber. Different topology types such as a line type, a ring type and a mesh type may be formed base on a specific requirement. An OTN 200 shown in FIG. 2 includes eight OTN devices 201, that is, devices A to H. 202 represents an optical fiber, and is used to connect two devices. 203 represents a client service interface, and is used to receive or send client service data. Based on an actual requirement, an OTN device may have different functions. Generally, OTN devices are divided into an optical layer device, an electrical layer device, and an optoelectronic hybrid device. The optical layer device is a device that can process an optical layer signal, for example, an optical amplifier (optical amplifier, OA) or an optical add/drop multiplexer (optical add-drop multiplexer, OADM). The OA may also be referred to as an optical line amplifier (optical line amplifier, OLA), and is mainly configured to amplify an optical signal, to support transmission of the optical signal to a further distance while ensuring specific performance of the optical signal. The OADM is configured to perform spatial conversion on an optical signal, so that the optical signal can be output from different output ports (sometimes referred to as directions). The electrical layer device is a device that can process an electrical layer signal, for example, a device that can process an OTN signal. The optoelectronic hybrid device is a device that has a capability of processing an optical layer signal and an electrical layer signal. It should be noted that one OTN device may integrate a plurality of different functions based on a specific integration requirement. The technical solutions provided in this application are applicable to OTN devices that include an electrical layer function and that have different forms and integration degrees.

It should be noted that a data frame structure used by an OTN device in the embodiments of this application is an OTN frame. The OTN frame is used to carry various service data and provide rich management and monitoring functions. The OTN frame may be an ODUk frame, an ODUCn frame, an ODUflex frame, an optical channel transport unit-k (optical transport unit k, OTUk) frame, an OTUCn frame, or a flexible OTN (FlexO) frame, and the like. A difference between an ODU frame and an OTU frame lies in that the OTU frame includes the ODU frame and OTU overhead; k represents different rate levels, for example, that k=1 represents 2.5 Gbps, and that k=4 represents 100 Gbps; and Cn represents a variable rate, and is specifically a rate that is a positive integer multiple of 100 Gbps. Unless otherwise specified, the ODU frame is any of the ODUk frame, the ODUCn frame, or the ODUflex frame, and the OTU frame is any of the OTUk frame, the OTUCn frame, or the FlexO frame. It should be further noted that with development of an OTN technology, a new type of OTN frame may be defined, which is also applicable to this application.

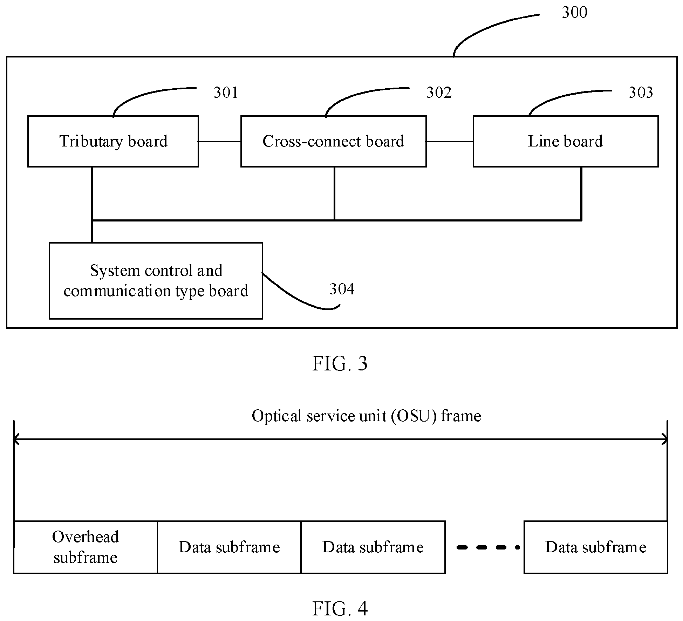

FIG. 3 is a schematic diagram of a hardware structure of a possible network device, for example, the device A in FIG. 2. Specifically, an OTN device 300 includes a tributary board 301, a cross-connection board 302, a line board 303, an optical layer processing board (not shown in the figure), and a system control and communication type board 304. A type of a board and a quantity of boards included in a network device may be different based on a specific requirement. For example, a network device serving as a core node does not have the tributary board 301. For another example, a network device serving as an edge node has a plurality of tributary boards 301 or does not have the optical cross-connection board 302. For another example, a network device that supports only an electrical layer function may not have the optical layer processing board.

The tributary board 301, the cross-connection board 302, and the line board 303 are configured to process an electrical layer signal of an OTN. The tributary board 301 is configured to receive and send various client services, for example, an SDH service, a packet service, an Ethernet service, and a fronthaul service. Further, the tributary board 301 may be divided into a client-side optical module and a signal processor. The client-side optical module may be an optical transceiver, configured to receive and/or send service data. The signal processor is configured to map service data to a data frame and demap the service data from the data frame. The cross-connection board 302 is configured to implement data frame switching to complete switching between one or more types of data frames. The line board 303 mainly processes a line-side data frame. Specifically, the line board 303 may be divided into a line-side optical module and a signal processor. The line-side optical module may be a line-side optical transceiver, configured to receive and/or send a data frame. The signal processor is configured to multiplex and demultiplex a line-side data frame, or perform mapping and demapping processing on the line-side data frame. The system control and communication type board 304 is configured to implement system control. Specifically, the system control and communication type board 304 may collect information from different boards by using a backplane, or send a control instruction to a corresponding board. It should be noted that unless otherwise specified, there may be one or more specific components (for example, a signal processor). This is not limited in this application. It should be further noted that a type of a board included in a device, a function design of the board and a quantity of boards are not limited in this application. It should be noted that in specific implementation, the foregoing two boards may be designed as one board. In addition, the network device may further include a power supply for backup, a fan for heat dissipation, and the like.

For example, a size of a low-rate frame is 53 bytes in a conventional technology, and an overhead area and a payload area respectively occupy 5 bytes and 48 bytes. In this case, for an OTN frame used to carry a low-rate frame, a proportion that is of a payload area of the OTN frame and that is used to carry overhead is 5/53=9.43%. Compared with a carrying manner in which one OTN frame carries another OTN frame (an overhead proportion is 0.42%), this low-rate frame solution has a problem of an excessively large overhead proportion. In other words, when the OTN frame carries a low-rate frame, a proportion used to carry service data is relatively small, that is, carrying efficiency is relatively low.

Therefore, a frame structure is newly defined in this application. To simplify description, the frame structure is subsequently referred to as an optical service unit (Optical Service Unit, OSU) frame. It should be noted that the name is merely an example and should not constitute any limitation on the frame structure defined in this application. The name may also be replaced with another name such as a low-rate frame, a low-rate service frame, or an optical service data unit frame.

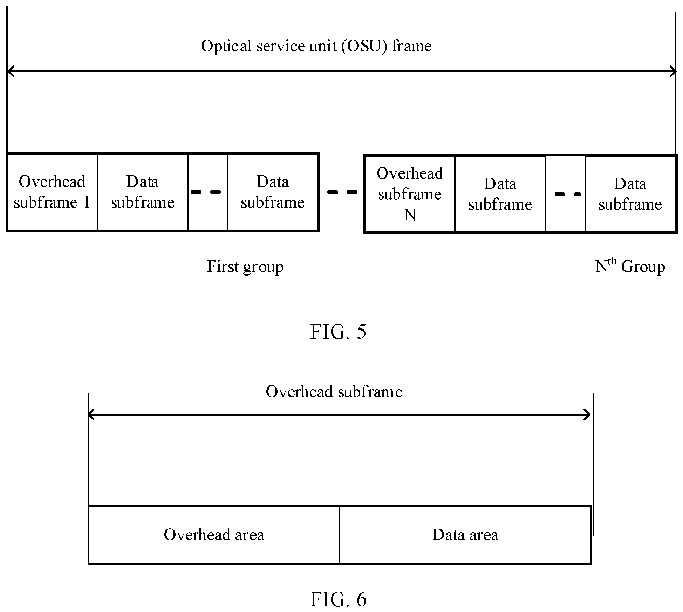

FIG. 4 and FIG. 5 are schematic diagrams of structures of two possible optical service unit (OSU) frames. As shown in FIG. 4, the OSU frame includes one overhead subframe and a plurality of data subframes. As shown in FIG. 5, the OSU frame includes a plurality of overhead subframes and a plurality of data subframes. One overhead subframe and a plurality of data subframes form one group. Therefore, one OSU frame includes a plurality of such groups. For example, the OSU frame in FIG. 5 includes N groups. A design in which one overhead subframe corresponds to a plurality of data subframes is used to reduce an overhead proportion.

It should be understood that the OSU frame may alternatively include only one overhead subframe and one data subframe. To reduce an overhead proportion, the overhead subframe further needs to carry data.

FIG. 6 is a schematic diagram of a structure of a possible overhead subframe. Specifically, the overhead subframe includes an overhead area and a data area. The overhead area is used to carry overhead information. The data area is used to carry service data. It should be noted that the overhead subframe may include only the overhead area. An advantage of adding the data area to the overhead subframe is that a proportion of overhead information can be further reduced. Overhead information that can be carried in the overhead subframe and a meaning of the overhead information are shown in Table 1. It should be noted that a list of overhead information provided in Table 1 does not mean that an overhead subframe needs to carry all the overhead information. In actual application, overhead information carried in an overhead subframe may be designed based on a specific requirement. This is not limited in this application.

**Table 1 Examples of overheads that may be carried in an overhead subframe**

| Name | Meaning |
|---|---|
| SID | The service identifier (service identifier, SID) is used to identify a specific service carried in a subframe of an OSU frame. The subframe may be a data subframe or an overhead subframe. |
| FAS | The frame alignment signal (Frame Alignment Signal, FAS) is used for OSU frame alignment. Specifically, the FAS may be set to a fixed value, for example, 4-byte "0xF6F62828". |
| MFAS | The multi-frame alignment signal (Multi-Frame Alignment Signal, MFAS) is used to align a multi-frame including a plurality of OSU frames. |
| SFT | The subframe type (Sub-Frame Type, SFT) is used to identify a specific type of a subframe. Specifically, a data subframe and an overhead subframe may be distinguished by using 1 bit. |
| TTI | The trail trace identifier (Trail Trace Identifier, TTI) is used to place trail trace information of an OSU frame. |
| BIP | The bit interleaved parity (Bit-Interleaved Parity, BIP) is used for data check, for example, bit interleaved parity-8 BIP-8. |
| BEI | The backward error indication (Backward Error Indication, BEI) is used to indicate whether a bit error exists in a trail in a receiving direction. |
| BDI | The backward defect indication (Backward Defect Indication, BDI) is used to indicate whether a trail in a receiving direction is faulty. |
| STAT | The status (Status) indication is used to identify trail status information, for example, an alarm indication signal or an idle signal indication that is transmitted downstream. |
| PM | The path monitoring (Path Monitoring, PM) is used to complete an end-to-end path monitoring function of an OSU frame, and may include one or more of the TTI, the BIP, the BEI, the BDI, or the STAT. |
| SM | Section Monitoring (Section Monitoring, SM) overhead is used to complete a section monitoring function of an OSU frame. |
| TCM | Tandem connection monitoring (Tandem Connection Monitoring, TCM) overhead is used to complete a tandem connection monitoring function of an OSU frame. |
| PT | The payload type (Payload Type, PT) is used to indicate a specific mapping manner currently used to map service data to an OSU frame, and/or a type of a service currently carried in the |
| | OSU frame. |
| DM | The delay measurement (Delay Measurement, DM) is used to provide an end-to-end delay measurement function of an OSU frame. |
| APS | The automatic protection switching (Automatic Protection Switching, APS) is used to provide an automatic protection switching function of an OSU frame. |
| GCC | The general communication channel (General Communication Channel, GCC) is used to provide a function of the general communication channel. |
| LEN | The valid data length is used to indicate a length of valid service data currently included in an OSU frame. The LEN may also be referred to as amount information of service data. |
| | Specifically, the information may be in a unit of a bit (bit), or may be counted in a unit of a byte or another granularity (for example, 8 bytes or 16 bytes). |

It should be noted that the overhead example provided in Table 1 does not relate to a quantity of bytes that each piece of overhead information needs to occupy. A size of an overhead subframe actually occupied in the OSU frame may be determined for the overhead information based on a specific requirement. For example, the FAS occupies 4 bytes, the DM occupies 2 bytes, and the LEN occupies 1 byte. In addition, to simplify the following description, a set of information, such as the BEI, the BDI, and the STAT, that is used to indicate various trail states is referred to as a trail status indication (Trail Status Indication, TXI). A person skilled in the art should understand that the TXI may include one or more of the BEI, the BDI, or the STAT. In addition, the TXI may further include other information used to indicate a trail state.

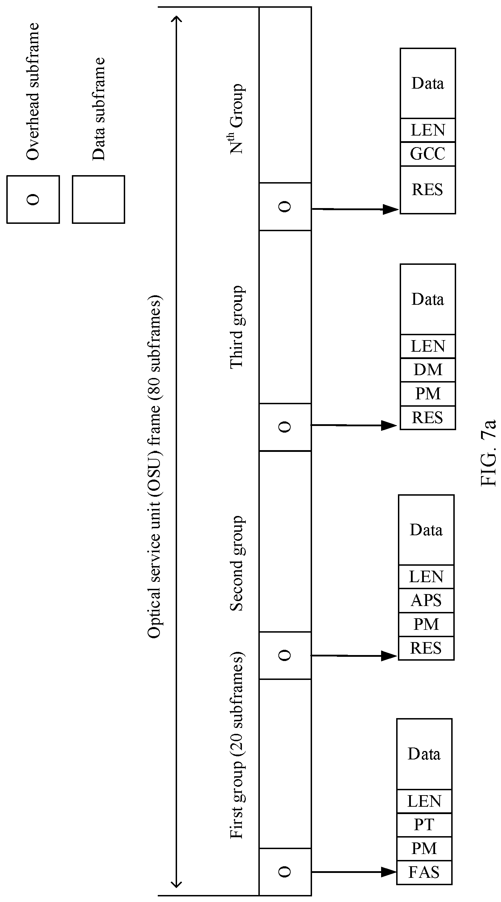

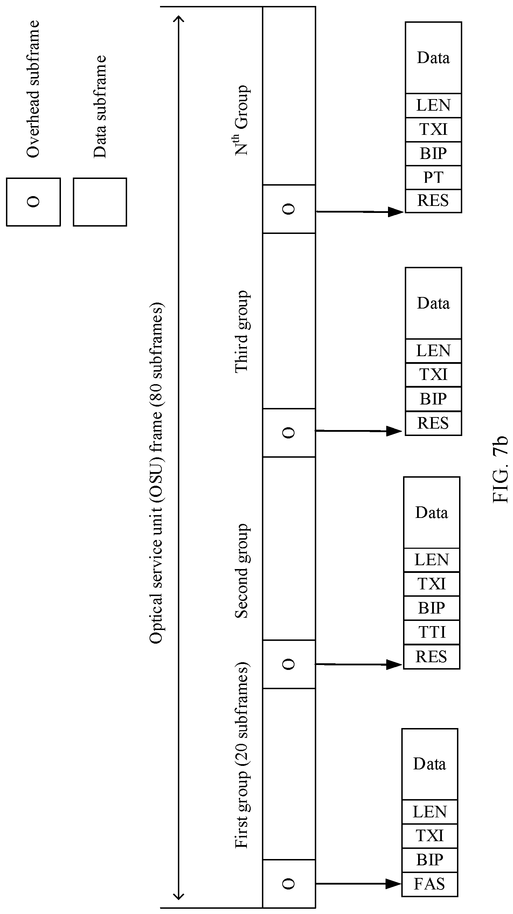

For the overhead information included in the overhead subframe, two specific examples are provided below. FIG. 7a and FIG. 7b are schematic diagrams of overhead fields included in two possible overhead subframes.

As shown in FIG. 7a, one OSU frame includes 80 subframes, where four subframes are overhead subframes, and 76 subframes are data subframes. The 80 subframes are divided into four groups. Each group of subframes includes one overhead subframe and 19 data subframes.

For example, a size of each subframe is 190 bytes, and one overhead subframe includes 8-byte overhead (the remaining location is used to carry data). An overhead proportion of the OSU frame is (4*8)/(4*20*190)=0.21%. In this manner, the overhead proportion can be greatly reduced, so that service carrying efficiency of an OTN frame can be improved.

Alternatively, for example, a size of each subframe is 240 bytes, and one overhead subframe includes 8-byte overhead (the remaining location is used to carry data). An overhead proportion of the OSU frame is (4*8)/(4*20*240)=0.17%. Alternatively, for example, a size of the subframe of the OSU frame is 256 bytes, and one overhead subframe includes 8-byte overhead (the remaining location is used to carry data). An overhead proportion of the OSU frame is (4*8)/(4*20*256)=0.16%.

A plurality of examples of the overhead subframe are provided above. In actual application, a size of the overhead subframe may be selected based on a requirement. For example, any value ranging from 112 bytes to 124 bytes may be selected; or any value ranging from 240 bytes to 252 bytes may be selected; or any value ranging frame 496 bytes to 508 bytes may be selected.

Overhead carried in the four overhead subframes in FIG. 7a are as follows.

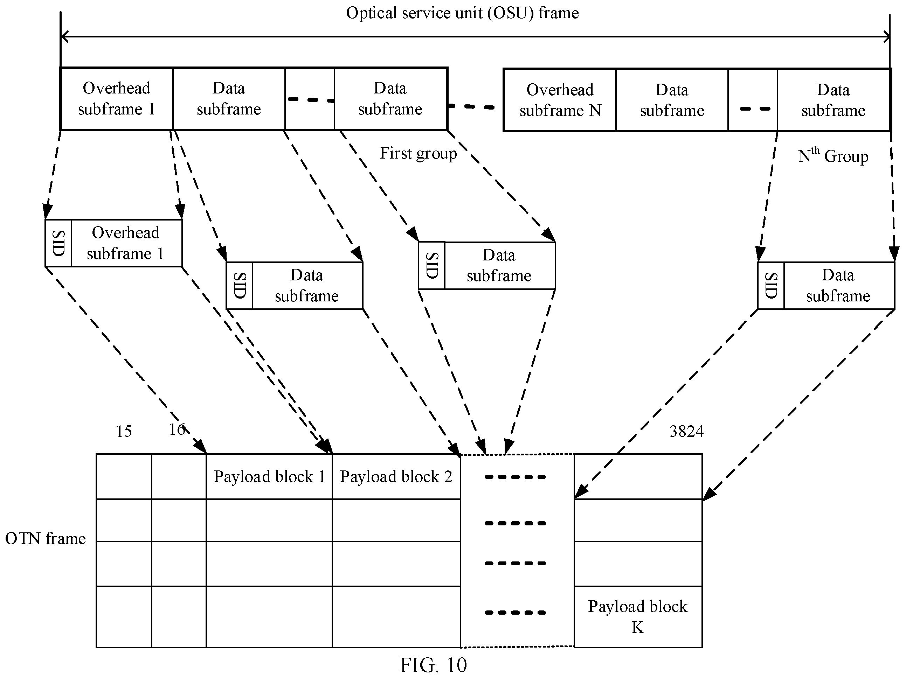

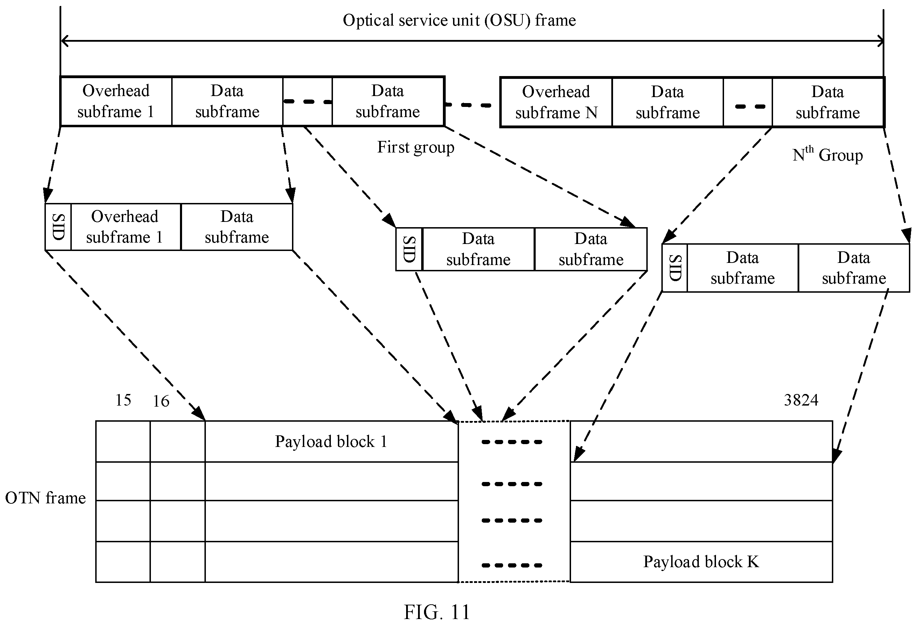

An overhead subframe in a first group includes the FAS (4 bytes), the PM (1 byte), the PT (1 byte), and the LEN (2 bytes). An overhead subframe in a second group includes the PM (1 byte), the APS (1 byte), and the LEN (2 bytes), and 4 bytes are reserved bytes (RES). An overhead subframe in a third group includes the PM (1 byte), the DM (1 byte), and the LEN (2 bytes), and 4 bytes are reserved bytes. An overhead subframe in a fourth group includes the GCC (2 bytes), and the LEN (2 bytes), and 4 bytes are reserved bytes. The LEN carried in each overhead subframe is used to indicate an amount of valid data included in the current overhead subframe and subsequently followed consecutive 19 data subframes. It should be noted that subframes in a group may carry same service data. When subframes in a same group carry different service data, specific services carried in the subframes further need to be distinguished by using a service identifier. For addition and processing of the service identifier, refer to related descriptions in FIG. 10 and FIG. 11. Details are not described herein.

Another location that is used as a reserved byte may further carry the overhead information enumerated in Table 1, such as the MFAS, the SM, or the TCM, for example, may carry 1-bit MFAS information to indicate a multi-frame including 256 OSU frames. Specifically, 0 may be carried in an MFAS field in each of the first 128 OSU frames, and 1 may be carried in an MFAS field in each of the subsequent 128 OSU frames. Alternatively, 1 byte is used to carry the MFAS information, and the MFAS byte increases from 0 to 255 based on the OSU frame.

A frame structure in FIG. 7b is similar to a frame structure shown in FIG. 7a. A main difference between the two frame structures lies in that in the frame structure shown in FIG. 7b, the overhead subframe carries different overhead information. Specifically, in the frame structure shown in FIG. 7b, an overhead subframe in a first group includes the FAS (4 bytes), the BIP (1 byte), the TXI (1 byte), and the LEN (2 bytes). An overhead subframe in a second group includes the TTI (1 byte), the BIP (1 byte), the TXI (1 byte), and the LEN (2 bytes), and the remaining 3 bytes are reserved bytes (RES). An overhead subframe in a third group includes the TXI (1 byte), the BIP (1 byte), and the LEN (2 bytes), and the remaining 3 bytes are reserved bytes. An overhead subframe in a fourth group includes the PT (1 byte), the BIP (1 byte), the TXI (1 byte), and the LEN (2 bytes), and the remaining 3 bytes are reserved bytes. The LEN carried in each overhead subframe is the same as that in FIG. 7a, and details are not described again. The TXI includes the BEI (4 bits), the BDI (1 bit), and the STAT (3 bits).

It should be noted that the overhead subframes of the OSU frame may be continuously placed, and then the data subframe is placed, to form the OSU frame. In the frame structure design in FIG. 7b, there is one overhead subframe at intervals of a specific quantity of data subframes. In other words, each overhead subframe is followed by a specific quantity of data subframes. A same type of overhead (for example, the BIP and the TXI in FIG. 7b) is placed at intervals of a specific quantity of subframes, so that a frequency at which some overhead occurs is twice or more higher than a frequency of the OSU frame. In this design manner, a receive-side device can quickly obtain trail status information, so that a rate at which the receive-side device responds to a trail status change can be improved. For example, if a trail is faulty, the receive-side device can quickly and accurately perform protection switching. For another example, if trail performance is degraded, the receive-side device may take a specific measure to change trail performance, and so on.

An overhead field in one of the overhead subframes may be used to transmit information that does not change frequently. In this way, overhead can be reduced, and service carrying efficiency can be further improved. For example, the TTI is carried only in a second overhead subframe in FIG. 7b.

Similar to the description in FIG. 7a, the overhead subframe in FIG. 7b may be further used to carry the overhead information enumerated in Table 1 such as the MFAS, the DM, and the APS. Details are not described again.

To further reduce an overhead proportion, a new overhead frame (subsequently referred to as a dedicated overhead frame) is further defined in this application. The dedicated overhead frame is used to carry overhead of a plurality of pieces of service data. The dedicated overhead frame is mainly used to carry some overhead information that does not change frequently, or overhead information that does not need to be transmitted in time, for example, the TTI, the PT, the BDI, the STAT, and the GCC. The dedicated overhead frame may be sent periodically or aperiodically based on a requirement. The dedicated overhead frame is sent only when required, so that a proportion of overhead information occupied in an OTN frame can be reduced, thereby improving service carrying efficiency.

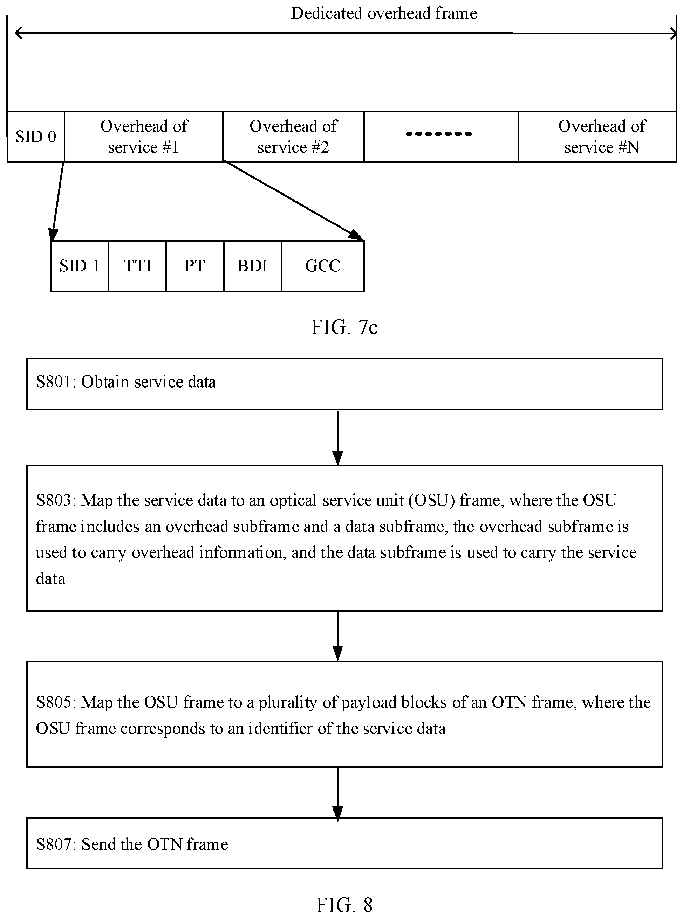

FIG. 7c is a schematic diagram of a structure of a dedicated overhead frame. As shown in FIG. 7c, the dedicated overhead frame carries a special SID (that is, a SID 0 in the figure), to indicate that the frame is a dedicated overhead frame used to carry overhead of a plurality of pieces of service data. The SID 0 may be represented by special padding, for example, all zeros or all ones. Specifically, a size of the dedicated overhead frame may be a size of one subframe of the foregoing OSU frame, for example, 192 bytes. The dedicated overhead frame is divided into a plurality of areas. Each area corresponds to one service, and is used to carry overhead information corresponding to the service. As shown in FIG. 7c, the dedicated overhead frame is divided into N areas, and overhead carried for a service #1 includes the TTI, the PT, the BDI, and the GCC. In actual application, information carried in the dedicated overhead frame may be selected based on a specific requirement.

It should be noted that when the dedicated overhead frame is independent of an OSU frame, an overhead subframe of the OSU frame can still be reserved to carry some overhead information that needs to be sent with service data, for example, the FAS, the BIP, and the LEN. In this way, a quantity of bytes of the overhead subframe of the OSU frame that are used to carry overhead decreases. Correspondingly, a quantity of bytes of the overhead subframe that are used to carry data increases. Therefore, carrying efficiency of the OTN frame is improved. Alternatively, the OSU frame may include only a data subframe and an overhead field with a fixed size. For example, a size of the OSU frame may be 190*76+4*3 bytes. Specifically, the OSU frame includes 76 data subframes with a size of 190 bytes, four BIP fields with a size of 1 byte, and four LEN fields with a size of 2 bytes. For another example, the OSU frame may have a size of only one overhead subframe, for example, 190 bytes. Each OSU frame carries a small amount of necessary overhead, such as the LEN.

Alternatively, when the dedicated overhead frame is a part of an OSU frame, the dedicated overhead frame may replace an overhead subframe. It should be understood that a solution using a dedicated overhead frame and an OSU frame that includes no overhead subframe ad may be understood as: This is equivalent to that an OSU frame includes a data subframe (that is, the foregoing described OSU frame that carries a small amount of necessary overhead) and an overhead subframe (that is, the dedicated overhead frame). Different from the overhead subframes shown in FIG. 7a and FIG. 7b, the dedicated overhead frame is divided into areas to carry overhead of different data. In addition, a frequency at which the dedicated overhead frame occurs is not fixed, and the dedicated overhead frame may be sent based on a specific requirement. In other words, in this specific solution, a quantity of subframes included in the OSU frame is not fixed.

It should be noted that an OSU frame structure may also use the OSU frame structure shown in FIG. 4. For example, one OSU frame includes 80 subframes, where one subframe is an overhead subframe, and 79 subframes are data subframes. The overhead subframe includes the FAS (4 bytes), the PM (3 bytes), the PT (1 byte), the APS (1 byte), the DM (1 byte), the GCC (2 bytes), and the LEN (2 bytes), and 2 bytes are reserved bytes. The LEN carried in the overhead subframe is used to indicate an amount of valid data included in the current overhead subframe and subsequently followed consecutive 79 data subframes. Specifically, for example, a size of the OSU subframe is 240 bytes. An overhead proportion of the OSU frame is 16/(80*240) =0.08%. In this manner, the overhead proportion can be greatly reduced, so that service carrying efficiency of an OTN frame can be improved.

A service processing method proposed in this application is described below with reference to FIG. 8. As shown in FIG. 8, an OTN device serving as a transmit side needs to perform the following steps to complete service data carrying.

S801: Obtain service data.

Specifically, the OTN device serving as the transmit side obtains the service data through a client service interface; or the transmit-side device locally generates service data that needs to be transmitted.

S803: Map the service data to an optical service unit (OSU) frame, where the OSU frame includes an overhead subframe and a data subframe, the overhead subframe is used to carry overhead information, and the data subframe is used to carry the service data.

Specifically, the transmit-side OTN device maps the service data to one or more subframes of the OSU frame. Using the OSU frame shown in FIG. 7b as an example, the service data is mapped to the overhead subframe and/or the data subframe. A quantity of bytes actually occupied by the service data may be transmitted by using a LEN field. In this way, a receive-side device may perform data parsing based on a value of the LEN, which is relatively simple. Certainly, the LEN is not necessarily required. If the service data cannot completely occupy an integer quantity of subframes (data subframes and/or overhead subframes), a special fixed padding bit may be filled.

S805: Map the OSU frame to a plurality of payload blocks of an OTN frame, where the OSU frame corresponds to an identifier of the service data.

Specifically, to identify service data carried in an OSU frame, an identifier of the service data carried in the OSU frame needs to be provided. There are a plurality of methods for making the OSU frame corresponding to the identifier of the service data. For details, refer to specific implementations shown in FIG. 10 and FIG. 11. Details are not described herein. To simplify description, the identifier of the service data is referred to as a service identifier SID for short.

It should be noted that to improve mapping efficiency, a plurality of OTN frames may be considered as a whole to carry a plurality of OSU frames. Therefore, a quantity of OTN frames corresponding to an OSU frame is not limited in the current step. For example, if a part of a payload block is in a first OTN frame and the other part is in a second OTN frame, the OSU frame may be mapped to payload blocks of two OTN frames.

S807: Send the OTN frame.

Specifically, the OTN device sends the OTN frame, for example, send the OTN frame to a downstream OTN device of the OTN device.

The technical solutions of this application are further described below based on some common aspects of this application that are described above.

Embodiments of this application provide a service processing method and apparatus, and a system. In this embodiment, the network scenario in FIG. 2 is used as an example. It is assumed that in this embodiment, a transmit-side device is A and a receive-side device is H. It should be noted that a trail A-H is merely an example, and may be replaced with another trail. For example, the trail may be replaced with the following: the device A-the device H-the device G-the device F. The device A is a source device, the device F is a destination device, and the device H and the device G are intermediate devices.

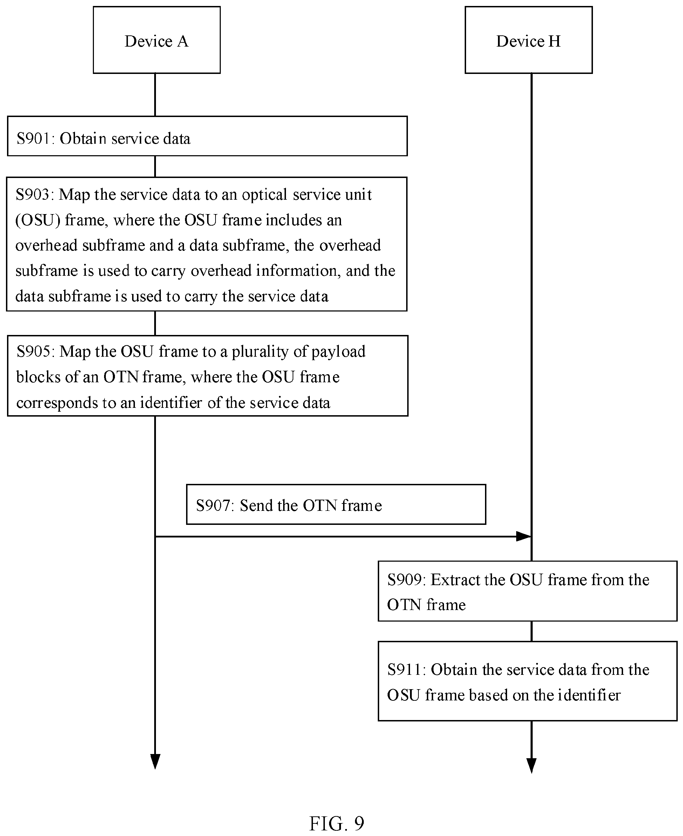

FIG. 9 is a schematic diagram of a service processing procedure according to an embodiment of this application. Each step is described below in detail. In the following steps, steps S901 to S907 are performed by the transmit-side device A, and steps S909 to S911 are performed by the receive-side device H. It should be noted that to avoid redundancy, that the receive-side device H receives an OTN frame sent by the device A is not repeatedly provided in the accompanying drawing.

S901: Obtain service data.

This step is similar to step S801 in FIG. 8. The description for step S801 is also applicable to this step, and details are not described herein again. For example, the device A receives the service data through a client service interface.

S903: Map the service data to an optical service unit (OSU) frame, where the OSU frame includes an overhead subframe and a data subframe, the overhead subframe is used to carry overhead information, and the data subframe is used to carry the service data.

This step is similar to step S803 in FIG. 8. The description for step S803 is also applicable to this step, and details are not described herein again. Specifically, the device A maps the received service data to one or more subframes of the OSU frame.

S905: Map the OSU frame to a plurality of payload blocks of an OTN frame, where the OSU frame corresponds to an identifier of the service data.

This step is similar to step S805 in FIG. 8. The description for step S805 is also applicable to this step, and details are not described herein again. Specifically, in this embodiment, a SID is added to each subframe of the OSU frame. Alternatively, a SID field may be set in both an overhead subframe and a data subframe of the OSU frame. It should be noted that in the former method, the SID field does not belong to the OSU frame. A process of implementing an OSU frame corresponding to a SID is described with reference to FIG. 10 and FIG. 11 by using the former method as an example.

FIG. 10 is a schematic diagram of a possible service identifier addition procedure in the service procedure shown in FIG. 9. Specifically, the OTN frame is divided into a plurality of payload blocks (for example, K payload blocks shown in the figure). A size of each payload block is equal to a subframe size of an OSU frame corresponding to the payload block plus a size of a SID field. For example, if a data subframe and an overhead subframe of the OSU frame have a same size, the size of the payload block is equal to the size of the data subframe or the overhead subframe plus the size of the SID field.

As shown in FIG. 10, in a process of mapping the OSU frame to the OTN frame, SID information is first added to each subframe of the OSU frame to indicate an identifier of service data carried in the subframe. Then, the subframe having the corresponding SID information is mapped to a payload area.

The foregoing mentioned that the OSU frame has a size of 80*190 bytes, and the SID field has 2 bytes is used as an example. Because the payload block of the OTN frame further needs to carry the SID, an overhead proportion of the OTN frame increases. Specifically, the overhead proportion of the OTN frame is (4*8+2*80)/(4*20*192)=1.25%. This implementation still has a specific advantage over a conventional technology in terms of carrying efficiency.

Alternatively, a person skilled in the art may know that the SID field is also included in each subframe of the OSU frame. In this case, the overhead proportion of the OTN frame is (4*8+2*80)/(4*20*190) =1.26%. This implementation still has a specific advantage over a conventional technology in terms of carrying efficiency. Each subframe independently carries the SID. Therefore, when passing through a cross-connection device or being sent to a line, the subframe can pass through the cross-connection device or be sent without waiting for receiving of a complete OSU frame. As long as a single OSU is received, the OSU subframe can pass through the cross-connection or be sent to a line based on the SID, so that processing delay can be shortened.

FIG. 11 is a schematic diagram of another possible service identifier addition procedure in the service procedure shown in FIG. 9. An SID addition process is basically similar to that in FIG. 10. A difference lies in that every two subframes correspond to one SID and correspond to one payload block. In other words, a size of one payload block is equal to sizes of two subframes plus a size of a SID field. Specifically, the device A adds a SID to two subframes (for example, two data subframes, or one overhead subframe and one data subframe), and then maps, to a payload area, the two subframes to which the SID is added. For example, the OSU frame does not include the SID (2 bytes). In this case, an overhead proportion of the OTN frame is (4*8+2*40)/(4*10*(2+2*190))=0.73%. Compared with the method in FIG. 10, the method shown in FIG. 11 can further reduce the overhead proportion. Alternatively, a person skilled in the art may understand that the SID is carried in every two subframes of the OSU frame. In this case, a size of one payload block is equal to sizes of two subframes.

S907: Send the OTN frame.

Specifically, the device A sends the OTN frame to the device H.

S909: Extract the OSU frame from the OTN frame.

Specifically, the device H extracts the OSU frame from one or more payload blocks of the OTN frame.

S911: Obtain the service data from the OSU frame based on the identifier.

Specifically, the device H identifies a SID corresponding to the subframe of the OSU frame; and then determines a subframe in which the service data is located, and extract the service data from the subframe. It should be noted that the service data may be extracted from one OSU frame, or may be extracted from a plurality of OSU frames.

A new OSU frame structure is defined and a corresponding mapping procedure is defined, so that a problem of low carrying efficiency existing in a conventional technology can be alleviated in the method provided in this embodiment of this application.

It should be noted that in the foregoing description, the OSU frame and the subframe may be replaced with an OSU multi-frame and an OSU frame. The subframe may also be referred to as a block. This is not limited in this application. It should be further noted that any of the foregoing described frame format or a variation thereof may be used in the embodiment shown in FIG. 9. In actual use, a frame format may be selected based on a specific requirement. This is not limited in this application.

For example, in specific implementation, the dedicated overhead frame shown in FIG. 7c may be further used in the embodiment shown in FIG. 9. In this case, steps shown in FIG. 9 may further include the following: The dedicated overhead frame is obtained, where the dedicated overhead frame is used to carry some overhead of the service data. Then, the dedicated overhead frame is mapped to a payload block of the OTN frame. A specific mapping method is similar to the manner shown in FIG. 10 or FIG. 11, and details are not described herein again. It should be noted that in this embodiment, overhead carried in the overhead subframe is other overhead information that needs to be transmitted with the data subframe. Specifically, reference may be made to the foregoing description related to FIG. 7c, and details are not described herein again.

For another example, in specific implementation, a flexible OSU frame including a data subframe and the dedicated overhead frame that is shown in FIG. 7c may be used in the embodiment shown in FIG. 9. In other words, the dedicated overhead frame is used to replace an overhead subframe. Specifically, the data subframe is mainly used to carry service data. In addition, the data subframe may carry a small amount of overhead information, such as the LEN. Other overhead is carried by the dedicated overhead frame. Correspondingly, step S903 shown in FIG. 9 is refined as the following: The service data is mapped to the data subframe of the OSU frame, and a part of overhead information corresponding to the service data is placed in the dedicated overhead frame, and the other part of the overhead information is placed in the data subframe. It should be noted that a location for insertion in the dedicated overhead frame may be selected based on a requirement. Generally, a relatively low frequency is selected for insertion, thereby reducing a proportion of overhead information in the OTN frame.

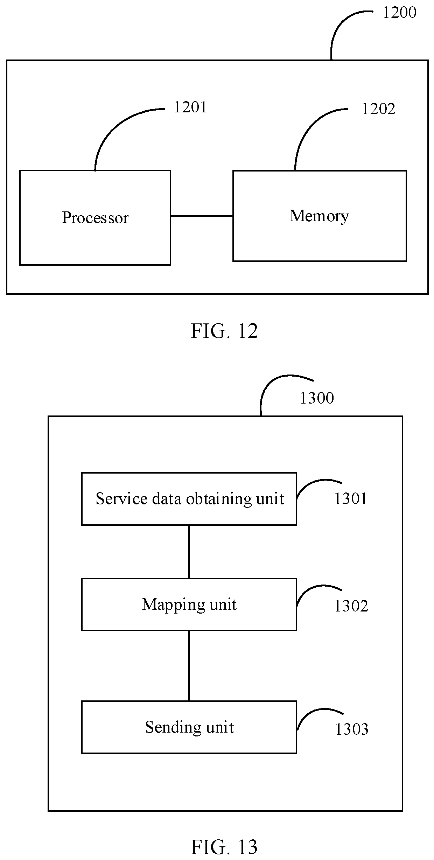

FIG. 12 is a schematic diagram of a structure of a possible service processing apparatus according to an embodiment of this application. As shown in FIG. 12, a service processing apparatus 1200 may include a processor 1201 and a memory 1202. The service processing apparatus may be applied to both a transmit-side device and a receive-side device.

When applied to a transmit-side device, the processor 1201 is configured to implement the method performed by the transmit-side device in FIG. 9. In an implementation process, steps of the processing procedure may complete, by using an integrated logic circuit of hardware in the processor 1201 or instructions in a form of software, the method performed by the transmit-side device in FIG. 9. Alternatively, when applied to a receive-side device, the processor 1201 is configured to implement the method performed by the receive-side device in FIG. 9. In an implementation process, steps of the processing procedure may complete, by using an integrated logic circuit of hardware in the processor 1201 or instructions in a form of software, the method performed by the receive-side device in FIG. 9. It should be noted that the processor 1201 and the memory 1202 may be located on the tributary board in the diagram of the hardware structure of the network device shown in FIG. 3.

It should be noted that the apparatus in FIG. 12 may also be configured to perform the method step related to the mentioned variation of the embodiment in FIG. 9, and details are not described herein again.

It should be further noted that when performing a sending step, the processor 1201 may send an OTN frame to an optical transceiver, so that the optical transceiver sends the OTN frame to a peer device. When performing a receiving step, the processor 1201 may receive OTN data from the optical transceiver, to perform another subsequent processing step.

In this embodiment of this application, the processor 1201 may be a general-purpose processor, a digital signal processor, an application-specific integrated circuit, a field-programmable gate array or another programmable logic device, a discrete gate or transistor logic device, or a discrete hardware component, and may implement or perform the methods, steps, and logic block diagrams disclosed in the embodiments of this application. The general-purpose processor may be a microprocessor, any conventional processor, or the like. The steps of the methods disclosed with reference to the embodiments of this application may be directly performed by a hardware processor, or may be performed by using a combination of hardware and software units in the processor. Program code executed by the processor 1201 to implement the methods may be stored in the memory 1202. The memory 1202 is coupled to the processor 1201. Coupling in the embodiments of this application is indirect coupling or a communication connection between apparatuses, units, or modules, and may be in an electrical, mechanical, or another form, and is used for information exchange between the apparatuses, units, or modules. The processor 1201 may cooperate with the memory 1202. The memory 1202 may be a non-volatile memory such as a hard disk drive (hard disk drive, HDD), or may be a volatile memory (volatile memory) such as a random access memory (random access memory, RAM). The memory 1202 is any other medium that can be used to carry or store expected program code in a form of an instruction or a data structure and that can be accessed by a computer, but is not limited thereto.

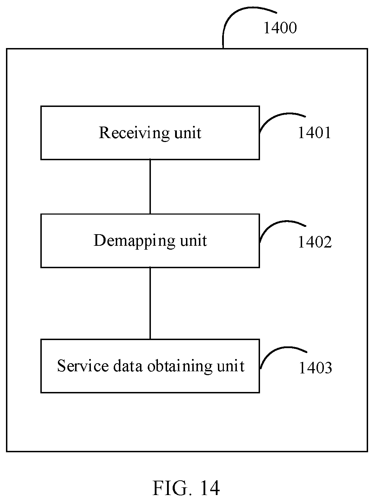

FIG. 13 and FIG. 14 provide schematic diagrams of structures of two possible network devices. A network device 1300 shown in FIG. 13 includes a service data obtaining unit 1301, a mapping unit 1302, and a sending unit 1303, which respectively perform step 901, steps 903 to 905, and step 907 in FIG. 9. A network device 1400 shown in FIG. 14 includes a receiving unit 1401, a demapping unit 1402, and a service obtaining unit 1403, which respectively correspond to the step of receiving the OTN frame, step 909, and step 911 in FIG. 9. A person skilled in the art should understand that the units included in the network device 1300 and the network device 1400 may be implemented by using one or more processors.

Based on the foregoing embodiments, an embodiment of this application further provides a computer-readable storage medium. The storage medium stores a software program, and when the software program is read and executed by one or more processors, the method provided in any one or more of the foregoing embodiments can be implemented. The computer-readable storage medium may include any medium that can store program code, such as a USB flash drive, a removable hard disk, a read-only memory, a random access memory, a magnetic disk, or an optical disc.

Based on the foregoing embodiments, an embodiment of this application further provides a chip. The chip includes a processor, configured to implement functions in any one or more of the foregoing embodiments, for example, obtaining or processing the data frame in the foregoing method. Optionally, the chip further includes a memory, and the memory is configured to store necessary program instructions and data that executed by the processor. The chip may include a chip, or may include a chip and another discrete device.

A person skilled in the art should understand that the embodiments of this application may be provided as a method, a system, or a computer program product. Therefore, this application may use a form of a hardware-only embodiment, a software-only embodiment, or an embodiment in combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to flowcharts and/or block diagrams based on the method, the device (system), and the computer program product in the embodiments of this application. It should be understood that each procedure and/or block in the flowchart and/or block diagram, as well as a combination of the procedure and/or block in the flowchart and/or block diagram, may be implemented by computer program instructions. These computer program instructions may be provided to a general-purpose computer, a dedicated computer, an embedded processor, or a processor of another programmable data processing device to generate a machine, so that instructions executed by the computer or the processor of the another programmable data processing device generate an apparatus for implementing a function specified in one or more procedures in the flowchart and/or one or more blocks in the block diagram.

These computer program instructions may be stored in a computer-readable memory that can instruct the computer or the another programmable data processing device to work in a specific manner, so that instructions stored in the computer-readable memory generate a product including an instruction apparatus, and the instruction apparatus implements a function specified in one or more procedures in the flowchart and/or one or more blocks in the block diagram.

These computer program instructions may be loaded onto the computer or the another programmable data processing device, so that a series of operation steps are performed on the computer or the another programmable data processing device to generate computer-implemented processing, and instructions executed on the computer or the another programmable data processing device provide steps for implementing a function specified in one or more procedures in the flowchart and/or one or more blocks in the block diagram.

Apparently, a person skilled in the art may make various modifications and variations to the embodiments of this application without departing from the scope of the embodiments of this application. This application is intended to cover these modifications and variations to the embodiments of this application provided that they fall within the scope of the claims of this application.

## Claims

1. A service processing method in an optical transport network, OTN, wherein the method comprises:
obtaining (S801, S901) service data;
mapping (S803, S903) the service data to an optical service unit, OSU, frame, wherein the OSU frame comprises at least one overhead subframe and a plurality of data subframes, the at least one overhead subframe is used to carry overhead information, and the plurality of data subframes are used to carry the service data, wherein one overhead subframe corresponds tc more than one data subframes;
mapping (S805, S905) the OSU frame to a plurality of payload blocks of an OTN frame, wherein the OSU frame corresponds to an identifier of the service data; and
sending (S807, S907) the OTN frame.

2. The method according to claim 1, wherein the at least one
overhead subframe is further used to carry the service data.

3. The method according to claim 1 or 2, wherein the OSU frame comprises a plurality of overhead subframes, and there is one overhead subframe at intervals of a fixed quantity of data subframes.

4. The method according to any one of claims 1 to 3, wherein the at least one overhead subframe comprises amount information of the service data carried in the OSU frame.

5. The method according to any one of claims 1 to 4, wherein the OSU frame comprises a service identifier field, and the service identifier field is used to carry the identifier.

6. The method according to any one of claims 1 to 5, wherein the at least one overhead subframe and the plurality of data subframes each have a size of 192 bytes; or the at least one overhead subframe and the plurality of data subframes each have a size of any value ranging from 112 bytes to 124 bytes; or the at least one overhead subframe and the plurality of data subframes each have a size of any value ranging from 240 bytes to 252 bytes; or the at least one overhead subframe and the plurality of data subframes each have a size of any value ranging from 496 bytes to 508 bytes.

7. The method according to any one of claims 1 to 6, wherein that the OSU frame corresponds to an identifier of the service data specifically comprises: every two subframes of the OSU frame correspond to the identifier of the service data, wherein the subframe is the overhead subframe or the data subframe.

8. The method according to any one of claims 1 to 7, wherein the method further comprises:
obtaining a service overhead frame, wherein the service overhead frame is used to carry some overhead information of the service data; and
mapping the service overhead frame to a payload block of the OTN frame.

9. A service processing apparatus (1200) in an optical transport network, OTN, wherein the apparatus comprises a processor (1201) and a memory (1202);
the memory (1202) stores program code; and
the processor (1201) is configured to read and execute the program code stored in the memory to implement the method according to any one of claims 1 to 8.

10. An optical transport network, OTN, device, wherein the OTN device comprises the apparatus according to claim 9 and an optical transceiver;
the apparatus is configured to send an OTN frame to the optical transceiver; and
the optical transceiver is configured to send the received OTN frame to another OTN device.

11. A service processing method in an optical transport network, OTN, wherein the method comprises:
receiving (S907) an OTN frame, wherein a plurality of payload blocks of the OTN frame carry an Optical Service Unit, OSU, frame, the OSU frame corresponds to an identifier of service data, the OSU frame comprises at least one overhead subframe and a plurality of data subframes, the at least one overhead subframe is used to carry overhead information, and the plurality of data subframes are used to carry the service data, wherein one overhead subframe corresponds to more than one data subframes;
extracting (S909) the OSU frame from the OTN frame; and
obtaining (S911) the service data from the OSU frame based on the identifier.

12. The method according to claim 11, wherein the at least one
overhead subframe is further used to carry the service data.

13. The method according to claim 11 or 12, wherein the OSU frame comprises a plurality of overhead subframes, and there is one overhead subframe at intervals of a fixed quantity of data subframes.

14. The method according to any one of claims 11 to 13, wherein the at least one overhead subframe comprises amount information of the service data carried in the OSU frame.

15. The method according to any one of claims 11 to 14, wherein the OSU frame comprises a service identifier field, and the service identifier field is used to carry the identifier.

## Patentansprüche

1. Verfahren zum Verarbeiten von Diensten in einem optischen Transportnetz (OTN), wobei das Verfahren Folgendes umfasst:
Erhalten (S801, S901) von Dienstdaten;
Abbilden (S803, S903) der Dienstdaten auf einen Rahmen einer optischen Diensteinheit (OSU - Optical Service Unit), wobei der OSU-Rahmen mindestens einen Overhead-Unterrahmen und eine Vielzahl von Daten-Unterrahmen umfasst, der mindestens eine Overhead-Unterrahmen zum Übertragen von Overhead-Informationen verwendet wird und die Vielzahl von Daten-Unterrahmen zum Übertragen der Dienstdaten verwendet werden, wobei ein Overhead-Unterrahmen mehr als einem Daten-Unterrahmen entspricht;
Abbilden (S805, S905) des OSU-Rahmens auf eine Vielzahl von Nutzdatenblöcken eines OTN-Rahmens, wobei der OSU-Rahmen einer Kennung der Dienstdaten entspricht; und
Senden (S807, S907) des OTN-Rahmens.

2. Verfahren nach Anspruch 1, wobei der mindestens eine Overhead-Unterrahmen ferner zum Übertragen der Dienstdaten verwendet wird.

3. Verfahren nach Anspruch 1 oder 2, wobei der OSU-Rahmen eine Vielzahl von Overhead-Unterrahmen umfasst und sich in Abständen einer festgelegten Anzahl von Daten-Unterrahmen jeweils ein Overhead-Unterrahmen befindet.

4. Verfahren nach einem der Ansprüche 1 bis 3, wobei der mindestens eine Overhead-Unterrahmen Mengeninformationen der im OSU-Rahmen übertragenen Dienstdaten umfasst.

5. Verfahren nach einem der Ansprüche 1 bis 4, wobei der OSU-Rahmen ein Dienstkennungsfeld umfasst und das Dienstkennungsfeld verwendet wird, um die Kennung zu übertragen.

6. Verfahren nach einem der Ansprüche 1 bis 5, wobei der mindestens eine Overhead-Unterrahmen und die Vielzahl von Daten-Unterrahmen jeweils eine Größe von 192 Byte aufweisen; oder der mindestens eine Overhead-Unterrahmen und die Vielzahl von Daten-Unterrahmen jeweils eine Größe eines beliebigen Werts zwischen 112 Byte und 124 Byte aufweisen; oder der mindestens eine Overhead-Unterrahmen und die Vielzahl von Daten-Unterrahmen jeweils eine Größe eines beliebigen Werts zwischen 240 Byte und 252 Byte aufweisen; oder der mindestens eine Overhead-Unterrahmen und die Vielzahl von Daten-Unterrahmen jeweils eine Größe eines beliebigen Werts zwischen 496 Byte und 508 Byte aufweisen.

7. Verfahren nach einem der Ansprüche 1 bis 6, wobei der OSU-Rahmen einer Kennung der Dienstdaten entspricht und insbesondere Folgendes umfasst: Jeweils zwei Unterrahmen des OSU-Rahmens entsprechen der Kennung der Dienstdaten, wobei der Unterrahmen der Overhead-Unterrahmen oder der Daten-Unterrahmen ist.

8. Verfahren nach einem der Ansprüche 1 bis 7, wobei das Verfahren ferner Folgendes umfasst:
Erhalten eines Dienst-Overhead-Rahmens, wobei der Dienst-Overhead-Rahmen verwendet wird, um einige Overhead-Informationen der Dienstdaten zu übertragen; und
Abbilden des Dienst-Overhead-Rahmens auf einen Nutzdatenblock des OTN-Rahmens.

9. Einrichtung zum Verarbeiten von Diensten (1200) in einem optischen Transportnetz (OTN), wobei die Einrichtung Folgendes umfasst
einen Prozessor (1201) und einen Speicher (1202);
wobei der Speicher (1202) Programmcode speichert; und
der Prozessor (1201) konfiguriert ist, um den Programmcode, der in dem Speicher gespeichert ist, zu lesen und auszuführen, um das Verfahren nach einem der Ansprüche 1 bis 8 durchzuführen.

10. Vorrichtung eines optischen Transportnetzes (OTN), wobei die OTN-Vorrichtung die Einrichtung nach Anspruch 9 und einen optischen Sendeempfänger umfasst;
wobei die Einrichtung konfiguriert ist, um einen OTN-Rahmen an den optischen Sendeempfänger zu senden; und
der optische Sendeempfänger konfiguriert ist, um den empfangenen OTN-Rahmen an eine andere OTN-Vorrichtung zu senden.

11. Verfahren zum Verarbeiten von Diensten in einem optischen Transportnetz (OTN), wobei das Verfahren Folgendes umfasst:
Empfangen (S907) eines OTN-Rahmens, wobei eine Vielzahl von Nutzdatenblöcken des OTN-Rahmens einen Optical Service Unit (OSU)-Rahmen überträgt, der OSU-Rahmen einer Kennung der Dienstdaten entspricht, der OSU-Rahmen mindestens einen Overhead-Unterrahmen und eine Vielzahl von Daten-Unterrahmen umfasst, der mindestens eine Overhead-Unterrahmen zum Übertragen von Overhead-Informationen verwendet wird und die Vielzahl von Daten-Unterrahmen zum Übertragen der Dienstdaten verwendet wird, wobei ein Overhead-Unterrahmen mehr als einem Daten-Unterrahmen entspricht;
Extrahieren (S909) des OSU-Rahmens aus dem OTN-Rahmen; und
Erhalten (S911) der Dienstdaten aus dem OSU-Rahmen basierend auf der Kennung.

12. Verfahren nach Anspruch 11, wobei der mindestens eine Overhead-Unterrahmen ferner zum Übertragen der Dienstdaten verwendet wird.

13. Verfahren nach Anspruch 11 oder 12, wobei der OSU-Rahmen eine Vielzahl von Overhead-Unterrahmen umfasst und sich in Abständen einer festgelegten Anzahl von Daten-Unterrahmen jeweils ein Overhead-Unterrahmen befindet.

14. Verfahren nach einem der Ansprüche 11 bis 13, wobei der mindestens eine Overhead-Unterrahmen Mengeninformationen der im OSU-Rahmen übertragenen Dienstdaten umfasst.

15. Verfahren nach einem der Ansprüche 11 bis 14, wobei der OSU-Rahmen ein Dienstkennungsfeld umfasst und das Dienstkennungsfeld verwendet wird, um die Kennung zu übertragen.

## Revendications

1. Procédé de traitement de données de service dans un réseau de transport optique, OTN, dans lequel le procédé comprend :
l'obtention (S801, S901) de données de service ;
le mappage (S803, S903) des données de service à une trame d'unité de service optique, OSU, dans lequel la trame OSU comprend au moins une sous-trame de surdébit et une pluralité de sous-trames de données, l'au moins une sous-trame de surdébit est utilisée pour transporter des informations de surdébit, et la pluralité de sous-trames de données sont utilisées pour transporter les données de service, dans lequel une sous-trame de surdébit correspond à plus d'une sous-trame de données ;
le mappage (S805, S905) de la trame OSU à une pluralité de blocs de charge utile d'une trame OTN, dans lequel la trame OSU correspond à un identifiant des données de service ; et
l'envoi (S807, S907) de la trame OTN.

2. Procédé selon la revendication 1, dans lequel l'au moins une sous-trame de surdébit est en outre utilisée pour transporter les données de service.

3. Procédé selon la revendication 1 ou 2, dans lequel la trame OSU comprend une pluralité de sous-trames de surdébit, et il existe une sous-trame de surdébit située à intervalles d'un nombre fixe de sous-trames de données.

4. Procédé selon l'une quelconque des revendications 1 à 3, dans lequel l'au moins une sous-trame de surdébit comprend des informations de quantité des données de service transportées dans la trame OSU.

5. Procédé selon l'une quelconque des revendications 1 à 4, dans lequel la trame OSU comprend un champ d'identifiant de service, et le champ d'identifiant de service est utilisé pour transporter l'identifiant.

6. Procédé selon l'une quelconque des revendications 1 à 5, dans lequel l'au moins une sous-trame de surdébit et la pluralité de sous-trames de données ont chacune une taille de 192 octets ; ou l'au moins une sous-trame de surdébit et la pluralité de sous-trames de données ont chacune une taille d'une quelconque valeur comprise entre 112 et 124 octets ; ou l'au moins une sous-trame de surdébit et la pluralité de sous-trames de données ont chacune une taille d'une quelconque valeur comprise entre 240 et 252 octets ; ou l'au moins une sous-trame de surdébit et la pluralité de sous-trames de données ont chacune une taille d'une quelconque valeur comprise entre 496 et 508 octets.

7. Procédé selon l'une quelconque des revendications 1 à 6, dans lequel le fait que la trame OSU corresponde à un identifiant des données de service comprend spécifiquement : chaque paire de sous-trames de la trame OSU correspond à l'identifiant des données de service, dans lequel la sous-trame est la sous-trame de surdébit ou la sous-trame de données.

8. Procédé selon l'une quelconque des revendications 1 à 7, dans lequel le procédé comprend en outre :
l'obtention d'une trame de surdébit de service, dans lequel la trame de surdébit de service est utilisée pour transporter certaines informations de surdébit des données de service ; et
le mappage de la trame de surdébit de service à un bloc de charge utile de la trame OTN.

9. Appareil de traitement de données de service (1200) dans un réseau de transport optique, OTN, dans lequel l'appareil comprend
un processeur (1201) et une mémoire (1202) ;
la mémoire (1202) stocke un code de programme ; et
le processeur (1201) est configuré pour lire et exécuter le code de programme stocké dans la mémoire pour mettre en œuvre le procédé selon l'une quelconque des revendications 1 à 8.

10. Dispositif de réseau de transport optique, OTN, dans lequel le dispositif OTN comprend l'appareil selon la revendication 9 et un émetteur-récepteur optique ;
l'appareil est configuré pour envoyer une trame OTN à l'émetteur-récepteur optique ; et
l'émetteur-récepteur optique est configuré pour envoyer la trame OTN reçue à un autre dispositif OTN.

11. Procédé de traitement de données de service dans un réseau de transport optique, OTN, dans lequel le procédé comprend :
la réception (S907) d'une trame OTN, dans lequel une pluralité de blocs de charge utile de la trame OTN transportent une trame d'unité de service optique, OSU, la trame OSU correspond à un identifiant de données de service, la trame OSU comprend au moins une sous-trame de surdébit et une pluralité de sous-trames de données, l'au moins une sous-trame de surdébit est utilisée pour transporter des informations de surdébit, et la pluralité de sous-trames de données sont utilisées pour transporter les données de service, dans lequel une sous-trame de surdébit correspond à plus d'une sous-trame de données ;
l'extraction (S909) de la trame OSU de la trame OTN ; et
l'obtention (S911) des données de service à partir de la trame OSU sur la base de l'identifiant.

12. Procédé selon la revendication 11, dans lequel l'au moins une sous-trame de surdébit est en outre utilisée pour transporter les données de service.

13. Procédé selon la revendication 11 ou 12, dans lequel la trame OSU comprend une pluralité de sous-trames de surdébit, et il existe une sous-trame de surdébit située à intervalles d'un nombre fixe de sous-trames de données.

14. Procédé selon l'une quelconque des revendications 11 à 13, dans lequel l'au moins une sous-trame de surdébit comprend des informations de quantité des données de service transportées dans la trame OSU.

15. Procédé selon l'une quelconque des revendications 11 à 14, dans lequel la trame OSU comprend un champ d'identifiant de service, et le champ d'identifiant de service est utilisé pour transporter l'identifiant.
